**Europäisches Patentamt**

(19) **European Patent Office**

**Office européen des brevets**

(11) Veröffentlichungsnummer: **0 182 901**
**B1**

(12) **EUROPÄISCHE PATENTSCHRIFT**

(45) Veröffentlichungstag der Patentschrift:
02.08.89

(21) Anmeldenummer: **85903240.1**

(22) Anmeldetag: **05.06.85**

(86) Internationale Anmeldenummer:
**PCT/EP 85/00269**

(87) Internationale Veröffentlichungsnummer:
**WO 86/00163 (03.01.86 Gazette 86/01)**

(51) Int. Cl.⁴: **G 11 B 5/008,** G 11 B 5/53, G 11 B 15/18

(54) **MAGNETBANDGERÄT.**

(30) Priorität: **07.06.84 DE 3421183**

(43) Veröffentlichungstag der Anmeldung:
**04.06.86 Patentblatt 86/23**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
DE-A-2 609 980
DE-B-1 191 850
GB-A-2 064 830
US-A-3 465 320
US-A-4 213 162

IBM Technical Disclosure Bulletin, vol. 18, No 12, May 1976, Armonk, N.Y. (US) K.N. Karol et al.: "Head/Rotor Control and Maximization of Time/Tape Space Utilization", pages 3926-393
Patents Abstracts of Japan, vol. 4, No 122 (P-25)(604) 29 Augustus 1980, & JP-A-5577031
Patents Abstracts of Japan, vol. 4, No 70, (P-12)(552) 23 May 1980, & JP-A-5538627
IBM Technical Disclosure Bulletin, vol. 22, No 11, April 1980, Armonk N.Y. (US) N.K. Arter et al.: "Error Recovery in Rotating Head Digital Recorders", pages 5101 to 5102

(73) Patentinhaber: **Deutsche Thomson- Brandt GmbH, Hermann- Schwer- Strasse 3 Postfach 1307, D-7730 Villingen- Schwenningen (DE)**

(72) Erfinder: **SCHANDL, Hartmut, Egerstrasse 2, D-7730 Villingen- Schwenningen (DE)**

(56) Entgegenhaltungen: (Fortsetzung)
**Funkschau, vol. 50, No 24, November 1978, München (DE) "Tragbares Videobandgerät mit 8-Kopf-Queraufzeichnung" pages 1213 to 1214**
**IBM Technical Disclosure Bulletin, vol. 17, No 1, June 1974, Armonk, N.Y. (US) J.J. Hagopian: "High-Track Density Magnetic Tape Memory", page 228**

## Beschreibung

Die Erfindung betrifft ein Magnetbandgerät nach dem Oberbegriff des Patentanspruchs 1.

Magnetband-Geräte nach dem Oberbegriff sind bekannt. Bereits bei den ersten brauchbaren Videoaufzeichnungs und wiedergabegeräten in Studiotechnik wurden die Magnetköpfe in einem rotierenden Kopfrad montiert und quer über das Magnetbandgerät geführt, um die notwendige hohe Relativgeschwindigkeit zwischen Magnetband und Magnetkopf bei vertretbarer Bandgeschwindigkeit zu erreichen. Bei diesem bekannten System der Queraufzeichnung, bei welchem das Kopfrad mit mehreren Magnetköpfen senkrecht zur Bandlaufrichtung rotiert, wird das Magnetband im Bereich der Kopfberührung quer zu seiner Längsachse kreisförmig gewölbt geführt, um eine optimale Anpassung an die rotierenden Magnetköpfe zu erreichen.

Bedingt durch die Breite handelsüblicher Magnetbänder ist es nicht möglich, ein ganzes Fernsehbild auf eine Spur aufzuzeichnen. Das Fernsehbild muß in mehreren Spuren unterteilt werden, wobei die Übergänge von einem Magnetkopf zum nächsten innerhalb eines Fernsehbildes einen komplizierten Zeitfehlerausgleich notwendig machen, damit im Bild sonst sichtbare Phasenstöße minimiert oder eliminiert werden können.

Aus der Auslegeschrift DE-B-119 185 ist eine Anordnung bekannt, in welcher das rotierenden Kopfrad eines Videorecorders in Richtung seiner Drehachse verschiebbar angeordnet ist. Dadurch ist es möglich, z. B. bei stillstehendem Magnetband mehrere nebeneinanderliegende Magnetspuren abzutasten, um dadurch die Wiedergabe eines Halbbildes zu ermöglichen. Die Längsverschiebung erfolgt durch ein auf das rotierende Kopfrad einwirkendes mechanisches Vorgelege, welches von dem Motor, der auch die Rotation der Kopftrommel bewirkt, angetrieben ist. Diese Anordnung ist mechanisch sehr aufwendig und elektrisch für Spurnachführungszwecke nicht steuerbar.

Für Heimvideorecorder hat sich das Querspurverfahren wegen des erfoderlichen Aufwandes bisher nicht durchsetzen können. Dort hat sich die Schrägspuraufzeichnung (DE-PS-927 999) durchgesetzt.

Der Erfindung liegt die Aufgabe zugrunde, die Querspuraufzeichnung auch für Heimgeräte verwendbar zu machen.

Diese Aufgabe wird durch die im Anspruch 1 beschriebene Erfindung gelöst. Vorteilhafte Weiterbildungen der Erfindung sind in den Unteransprüchen beschrieben.

Im Prinzip wird im Wiedergabebetrieb eine Nachsteuerung der Lage der Magnetköpfe zur aufgezeichneten Magnetspur ermöglicht, indem das Kopfrad in Richtung seiner Drehachse verschiebbar ist. So kann auch für Sonderfunktionen im Wiedergabebetrieb bei verringerter oder erhöhter Bandgeschwindigkeit oder auch bei stehendem Magnetband durch die Verschiebung des rotierenden Kopfrades eine optimale Spurnachsteuerung erreicht werden.

Im Sonderfall des stehenden Magnetbandes z. B. für Standbildwiedergabe, muß zu den im Spielbetrieb erforderlichen Korrektursignalen ein Steuersignal zugesetzt werden. Dadurch wird die rotierende Kopftrommel derart verschoben, daß kontinuierlich so viele Magnetspuren abgetastet werden, wie zur Darstellung eines Bildes erforderlich sind. Bei Verwendung von mehr als zwei Köpfen und paariger Kopfanordnung (2n) ist es zweckmäßig, pro Halbbild 300 statt 312 Zeilen auszulesen, also 12 Spuren pro Halbbild, da für den Bildwechsel (Rücklauf) einige Zeilen benötigt werden. In Verbindung mit einer modernen Elektronik ist es möglich, den mechanischen Aufwand gering zu halten und die Baugröße gegenüber Magnetbandaufzeichnungsgeräten mit vom Magnetband umschlungenen Kopftrommeln zu verringern.

Die Korrektursignale für den Spielbetrieb zum Ausgleich der Spuren untereinander zwecks Vermeidung von sichtbaren Phasensprüngen können bei jedem Kopfübergang z. B. mit Hilfe einer Sample and Hold-Schaltung durch Messung der Zeilenlänge (64 μs) ermittelt werden. Die für eine derartige höherfrequente Nachsteuerung der rotierenden Kopftrommel erforderlichen Werte betragen etwa ± 5 μ bei 12 μ Spurbreite mit der halben Kopfwechselfrequenz von 312 Hz.

Auch können, wie aus verschiedenen Veröffentlichungen bekannt, zusätzliche Signale für eine automatische Spurnachsteuerung, sogenannte ATF-Signale (Automatic Track Following) bei der Aufnahme mit aufgezeichnet werden. Eine Auswertung dieser Signale kann die vergleichsweise niederfrequentere Korrektur im Antriebssystem durch Nachsteuerung des Capstan-Antriebs bewirken. Für eine derartige Korrektur kann eine Kassette mit integriertem Riemenantrieb vorteilhaft sein.

Bei einer bevorzugten Ausführung der Erfindung werden Spuren mit einem Inhalt von 25 Fernsehzeilen je Spur bei einer Breite des Magnetbandes von 8 mm aufgezeichnet. Dabei beträgt die Abtastgeschwindigkeit etwa 4 m/s. Die Zahl der Magnetköpfe beträgt je nach Wahl des Umschlingungswinkel 2n = 6 (60 - 80°) oder 2n = 8 bei einem durch die Wölbung erzielten Umschlingungswinkel von 45 - 60°.

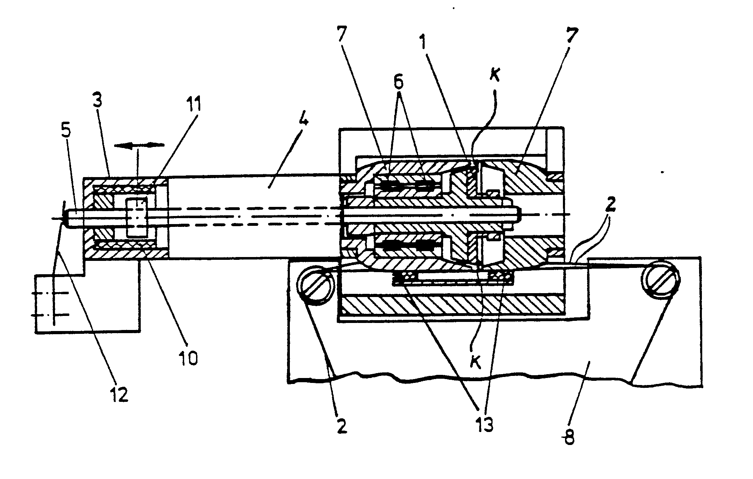

Die Erfindung wird im folgenden an Hand eines in der Zeichnung dargestellten Ausführungsbeispiels näher erläutert.

Die Zeichnung zeigt in einer teilweisen Schnittdarstellung das Antriebssystem für das Kopfrad 1 in Arbeitsstellung zusammen mit einer eingelegten Magnetbandkassette 8, in der ein Magnetband 2 angetrieben wird.

Das Magnetband 2 liegt zwischen dem Bandführungszylinder 7 und dem Andruckfilzen 13. Der Bandführungszylinder 7 ist bei diesem Beispiel fest angebracht, rotiert aber nicht. Dabei wird das Magnetband 2 im Wirkungsbereich der auf dem Kopfrad 1 angeordneten Magnetköpfe K derart gewölbt, daß seine Oberfläche an den durch die Magnetköpfe K beschriebenen Kreis angepaßt wird. Für die Anpassung an die erforderliche Wölbung sorgen die Andruckfilze 13, die so beidseitig vom Kopfrad 1 ausgeordnet sind, daß das Band 2 im Bereich des Band-Kopf-Kontaktes federnd an die Köpfe angepaßt wird. Diese exakte Anpassung ermöglicht einen guten Band-Kopf-Kontakt. Das Kopfrad 1 ist mit 2n Köpfen K versehen, deren Spalte abwechselnd unterschiedliche Azimutwinkel aufweisen.

Die Zuführung bzw. Abnahme der Signalspannungen zu bzw. von den Magnetköpfen K geschieht mittels zweier-Drehtransformatoren 6. Dabei sind bei vier und mehr Köpfen die Magnetköpfe K mit gleichem Azimutwinkel mit jeweils einem Drehtransformator 6 elektrisch verbunden. Dieses kann durch Reihen- oder auch durch Parallelschaltung der Magnetkopfspulen erfolgen.

Der Antrieb des Kopfrades 1 geschieht durch einen Antriebsmotor 4, welcher mit dem Kopfrad 1 und einem für die Nachsteuerung dienenden elektromechanischen Wandler 3 auf einer gemeinsamen Achse 5 angeordnet ist. Der elektromechanische Wandler 3 besteht aus einer Spule 10, in die ein Weicheisenkern 11 und damit die ihm tragende Achse 5 bei Anlegen einer Steuerspannung gegen eine Feder 12 gezogen wird.

Der Wandler 3 ist vorzugsweise Teil des Antriebsmotors 4, so daß bei Anlegen der Steuerspannung der Rotor des Motors 4 in Achsrichtung verschoben wird.

Es ist auch möglich, als Wandler ein piezoelektrisches System einzusetzen.

## Patentansprüche

1. Magnetbandgerät mit quer zur Bandlaufrichtung bewegten, auf einem rotierenden Kopfrad (1) angeordneten Magnetköpfen für die Aufzeichnung und/oder für das Lesen von Magnetspuren, wobei das Kopfrad (1) von einem Antriebsmotor (4) angetrieben wird, dadurch gekennzeichnet, daß Kopfrad (1) und Rotor des Antriebsmotors (4) fest auf einer gemeinsamen Drehachse (5) angeordnet sind, und daß das Kopfrad (1) zusammen mit dem Rotor vom Antriebsmotor (4) in Richtung der gemeinsamen Drehachse (5) verschiebbar sind.

2. Magnetbandgerät nach Anspruch 1, dadurch gekennzeichnet, daß die Verschiebung des rotierenden Teiles (1, 4) mit Hilfe eines elektromechanischen Wandlers (3) erfolgt.

3. Magnetbandgerät nach Anspruch 1 und Anspruch 2, dadurch gekennzeichnet, daß der bewegende Teil des elektromagnetischen Wandlers (3) zusammen mit den rotierenden Teilen (1, 4) auf der gemeinsamen Achse angeordnet sind.

4. Magnetbandgerät nach Anspruch 2 und/oder 3, dadurch gekennzeichnet, daß der Rotor des Antriebsmotors (4) Teil des elektromagnetischen Wandlers (3) ist.

5. Magnetbandgerät nach Anspruch 2 und/oder 3, dadurch gekennzeichnet, daß der elektromagnetische Wandler (3) aus einem Tauchspulsystem besteht.

6. Magnetbandgerät nach Anspruch 2 und/oder 3, dadurch gekennzeichnet, daß der elektromagnetische Wandler (3) aus einem piezoelektrischen System besteht.

7. Magnetbandgerät nach einem der Ansprüche 1 - 3, dadurch gekennzeichnet, daß das Kopfrad (1) mit 2n Köpfen (K) versehen ist, deren Spalte alternierend zwei unterschiedliche Azimutwinkel aufweisen.

8. Magnetbandgerät nach einem der Ansprüche 1 - 7, dadurch gekennzeichnet, daß die Steuerung des elektromagnetischen Wandlers (3) im Spielbetrieb in Abhängigkeit von Korrektursignalen erfolgt, die durch Auswertung der Phasenstöße beim Übergang von einer Spur auf die nächste Spur gewonnen werden.

9. Magnetbandgerät nach Anspruch 8, dadurch gekennzeichnet, daß Phasenstöße beim Übergang von einer Spur auf die nächste Spur durch Steuerung der Verschiebung des rotierenden Kopfrades (1) minimiert werden.

10. Magnetbandgerät nach einem der Ansprüche 1 - 9, dadurch gekennzeichnet, daß im Spielbetrieb die Abtastung der Magnetspuren neben deren Spurmitte erfolgt und daß aus der Abweichung zur Spurmitte ein Steuersignal für die Verschiebung des rotierenden Kopfrades (1) abgeleitet wird.

11. Magnetbandgerät nach einem der Ansprüche 1 - 10, dadurch gekennzeichnet, daß das rotierende Kopfrad (1) so weit verschiebbar ist, daß bei stehendem Magnetband (2) nacheinander verschiedene Magnetspuren von den Magnetköpfen (K) abgetastet werden können.

12. Magnetbandgerät nach Anspruch 11, dadurch gekennzeichnet, daß bei stehendem Magnetband (2) so viele Magnetspuren abgetastet werden, daß bei Videoaufzeichnung ein Halb- oder Vollbild wiedergegeben werden kann.

13. Magnetbandgerät nach Anspruch 11, dadurch gekennzeichnet, daß die Verschiebungsgeschwindigkeit des rotierenden Kopfrades (1) bei stehendem Magnetband (2) gleich der Standardgeschwindigkeit des bewegten Magnetbandes (2) ist.

14. Magnetbandgerät nach einem der Ansprüche 1 - 13, dadurch gekennzeichnet, daß das Magnetband (2) eine Breite von 8 mm aufweist und bei einer Abtastgeschwindigkeit von ca. 4 m/sec jede Spur ca. 1.600 µs (25 Fernsehzeilen) lang ist.

15. Magnetbandgerät nach einem der Ansprüche 1 - 14, dadurch gekennzeichnet, daß die Zahl der Magnetköpfe (K) 2n = 6 beträgt, der Durchmesser des Kopfrades 1 etwa 12 - 13 mm beträgt und der Umschlingungswinkel (Wölbung) des Magnetbandes (2) zwischen 60 und 80° liegt.

16. Magnetbandgerät nach einem der Ansprüche 1 - 15, dadurch gekennzeichnet, daß die Zahl der Magnetköpfe (K) 2n = 8, der Durchmesser des Kopfrades (1) etwa 16 - 17 mm beträgt und der Umschlingungswinkel (Wölbung) des Magnetbandes (2) zwischen 45 und 60° liegt.

**Claims**

1. Magnetic tape apparatus with magnetic heads for the recording and/or reading of magnetic tracks, said magnetic heads being disposed on a rotating head wheel (1) and moved transversely to the direction of tape run and the head wheel (1) being driven by a drive motor (4), characterised in that head wheel (1) and rotor of the drive motor (4) are disposed firmly on a common rotating axis (5) and that the heed wheel (1) together with the rotor are displacable by the drive motor (4) in the direction of the common rotating axis (5).

2. Magnetic tape apparatus according to Claim 1, characterised in that the rotating part (1, 4) is displaced by a means of an electromagnetic converter (3).

3. Magnetic tape apparatus according to Claim 1 and Claim 2, characterised in that the moving part of the electromagnetic converter (3) and the rotating parts (1, 4) are disposed on the common axis.

4. Magnetic tape apparatus according to Claim 2 and/or 3, characterised in that the rotor of the drive motor (4) is part of the electromagnetic converter (3).

5. Magnetic tape apparatus according to Claim 2 and/or 3, characterised in that the electromagnetic converter (3) consists of a solenoid system.

6. Magnetic tape apparatus according to Claim 2 and/or 3, characterised in that the electromagnetic tape converter (3) consists of a piezoelectric system.

7. Magnetic tape apparatus according to any one of Claims 1 - 3, characterised in that the head wheel (1) is provided with 2n heads (K) the gaps between which exhibit in turn two different azimuth angles.

8. Magnetic tape apparatus according to any of Claims 1 - 7, characterised in that the electromagnetic converter (3) is controlled during playback as a function of correction signals which are obtained by proccessing of the phase breaks on the transition from one track to the next track.

9. Magnetic tape apparatus according to Claim 8, characterised in that phase breaks on the transition from one track to the next track are minimized by control of the displacement of the rotating head wheel (1).

10. Magnetic tape apparatus according to any one of Claims 1 - 9, characterised in that during play-back the magnetic tracks are scanned near their track centre and that a control signal for the displacement of the rotating head wheel (1) is derived from the deviation with respect to the track centre.

11. Magnetic tape apparatus according to any one of Claims 1 - 10, characterized in that the rotating head wheel (1) is displaceable to such an extent that when the magnetic tape (2) is stationary, various magnetic tracks can be scanned in succession by magnetic heads (K).

12. Magnetic tape apparatus according to Claim 11, characterised in that when the magnetic tape (2) is stationary a number of magnetic tracks are scanned such that during video recording a field or frame can be reproduced.

13. Magnetic tape apparatus according to Claim 11, characterised in that when the magnetic tape (2) is stationary, the displacement speed of the rotating head wheel (1) is equal to the standard speed of the moving magnetic tape (2).

14. Magnetic tape apparatus according to any one of Claims 1 - 13, characterised in that the magnetic tape (2) has a width of 8 mm and that with a scanning rate of approx. 4 m/sec each track is approx. 1 600 μs long (25 TV lines).

15. Magnetic tape apparatus according to any one of Claims 1 - 14, characterised in that the number of magnetic heads (K) 2n = 6, the diameter of the head wheel (1) is approx. 12 - 13 mm and the angle of wrap (curvature) of the magnetic tape (2) lies between 60 and 80°.

16. Magnetic tape apparatus according to any one of Claims 1 - 13, characterised in that the number of magnetic heads (K) 2n = 8, the diameter of the head wheel (1) is approx. 16 - 17 mm and the angle of wrap (curvature) of the magnetic tape (2) lies between 45 and 80°.

**Revendications**

1. Appareil à bande magnétique comportant des têtes magnétiques, qui sont mobiles transversalement par rapport à la direction de déplacement de la bande et sont disposées sur une roue porte-têtes (1) rotative, pour l'enregistrement et/ou la lecture de pistes magnétiques, la roue porte-têtes (1) étant entraînée par un moteur d'entraînement (4), caractérisé en ce que la roue porte-têtes et le rotor du moteur d'entraînement (4) sont montés fixes sur un axe de rotation commun (5), et que la roue porte-têtes (1) et le rotor du moteur d'entraînement (4) sont déplaçables dans la direction de l'axe de rotation commun (5).

2. Appareil à bande magnétique selon la revendication 1, caractérisé en ce que le déplacement de la partie rotative (1, 4) est réalisé à l'aide d'un transducteur électromécanique (3).

3. Appareil à bande magnétique selon les revendications 1 et 2, caractérisé en ce que la partie mobile du transducteur électromagnétique (3) ainsi que les parties rotatives (1, 4) sont disposées sur l'axe commun.

4. Appareil à bande magnétique selon la revendication 2 et/ou 3, caractérisé en ce que le rotor du moteur d'entraînement (4) fait partie du transducteur électromagnétique (3).

5. Appareil à bande magnétique selon la revendication 2 et/ou 3, caractérisé en ce que le transducteur électromagnétique (3) est constitué par un système à bobine mobile.

6. Appareil à bande magnétique selon la revendication 2 et/ou 3, caractérisé en ce que le transducteur électromagnétique (3) est constitué par un système piézoélectrique.

7. Appareil à bande magnétique selon l'une des revendications 1 - 3, caractérisé en ce que la roue porte-têtes (1) comporte 2n têtes (K), dont les entrefers possèdent, en alternance, deux angles azimutaux différents.

8. Appareil à bande magnétique selon l'une des revendications 1 - 7, caractérisé en ce que la commande du transducteur électromagnétique (3) s'effectue, lors de la lecture, en fonction de signaux de correction, qui sont obtenus par évaluation des sauts de phase lors du passage d'une piste à la piste immédiatement suivante.

9. Appareil à bande magnétique selon la revendication 8, caractérisé en ce que les sauts de phase lors du passage d'une piste à la piste immédiatement suivante sont réduits au minimum au moyen de la commande du décalage de la roue porte-têtes (1) rotative.

10. Appareil à bande magnétique selon l'une des revendications 1 - 9, caractérisé en ce que, lors de la lecture, l'exploration des pistes magnétiques s'effectue a côté de leur centre, et qu'un signal de commande pour le décalage de la roue porte-têtes (1) rotative est dérivé de l'écart par rapport au centre de la piste.

11. Appareil à bande magnétique selon l'une des revendications 1 - 10, caractérisé en ce que la roue porte-têtes (1) rotative peut être décalée de telle sorte que, lorsque la bande magnétique (2) est fixe, différentes pistes magnétiques peuvent être explorées successivement par les têtes magnétiques (K).

12. Appareil à bande magnétique selon la revendication 11, caractérisé en ce que, dans le cas où la bande magnétique (2) est fixe, on peut explorer un grand nombre de pistes magnétiques de sorte que, lors de l'enregistrement vidéo, on peut obtenir la reproducton d'une trame ou d'une image complète.

13. Appareil à bande magnétique selon la revendication 11, caractérisé en ce que la vitesse de déplacement de la roue porte-têtes (1) rotative, la bande magnétique (2) étant fixe, est égale à la vitesse standard de la bande magnétique mobile (2).

14. Appareil à bande magnétique selon l'une des revendications 1 - 13, caractérisé en ce que la bande magnétique (2) possède une largeur de 8 mm et que, pour une vitesse d'exploration d'environ 4 m/s, chaque piste possède une longueur correspondant approximativement à 1600 µs (25 lignes de télévision).

15. Appareil à bande magnétique selon l'une des revendications 1 - 14, caractérisé en ce que le nombre des têtes magnétiques (K) est 2n = 6, que le diamètre de la roue porte-têtes (1) est égal à environ 12 - 13 mm et que l'angle d'enroulement (cintrage) de la bande magnétique (2) est compris entre 60 et 80°.

16. Appareil à bande magnétique selon l'une des revendications 1 - 15, caractérisé en ce que le nombre des têtes magnétiques (K) est 2n = 8, que le diamètre de la roue porte-têtes (1) est égal à environ 16 - 17 mm et que l'angle d'enroulement (cintrage) de la bande magnétique (2) est compris entre 45 et 60°.